# EUROPÄISCHE PATENTSCHRIFT

(11) **EP 2 380 368 B1**
(45) Veröffentlichungstag und Bekanntmachung des Hinweises auf die Patenterteilung: **06.12.2017**
(21) Anmeldenummer: 10700805.4
(22) Anmeldetag: 12.01.2010
(51) Int. Cl.: H04W 4/02, H04L 29/08

(54) **STEUERUNG VON SEITENS IN EINEM MOBILFUNKNETZ BETREIBBAREN MOBILEN ENDGERÄTEN AUSFÜHRBAREN ANWENDUNGEN**
CONTROL OF APPLICATIONS WHICH CAN BE CARRIED OUT BY MOBILE TERMINALS THAT CAN BE OPERATED IN A MOBILE RADIO NETWORK
GESTION D'APPLICATIONS EXÉCUTABLES PAR DES TERMINAUX MOBILES POUVANT FONCTIONNER SUR UN RÉSEAU DE TÉLÉPHONIE MOBILE

(30) Priorität: 20.01.2009 DE 102009005529
(43) Veröffentlichungstag der Anmeldung: 26.10.2011
(73) Patentinhaber: Vodafone Holding GmbH, 40213 Düsseldorf (DE)
(72) Erfinder: KULAKOV, Alexei, 40595 Düsseldorf (DE); LU, Yang, 40489 Düsseldorf (DE); MUSTAPHA, Mona, Berkshire SL4 5PJ (GB); GOLAUP, Assen, Slough SL2 5EY (GB); TOEPFER, Armin, 41464 Neuss (DE); HART, Mike, 40878 Ratingen (DE); HOLZBERG, Jan, 40213 Düsseldorf (DE)
(74) Vertreter: Weisbrodt, Bernd
(86) Internationale Anmeldenummer: PCT/EP2010/000100
(87) Internationale Veröffentlichungsnummer: WO 2010/083947

(56) Entgegenhaltungen:
- EP-A1- 1 850 608
- WO-A1-2007/009932
- WO-A1-2007/045564
- WO-A1-2007/073079
- GB-A- 2 396 779
- US-A1- 2004 266 461
- US-A1- 2006 135 091
- US-A1- 2007 149 214
- MARTIN JOHNSSON ET AL: "Ambient Networks - A Framework for Multi-Access Control in Heterogeneous Networks" 2006 IEEE 64TH VEHICULAR TECHNOLOGY CONFERENCE : VTC 2006-FALL ; 25 - 28 SEPTEMBER 2006, MONTREAL, QUEBEC, CANADA, PISCATAWAY, NJ : IEEE OPERATIONS CENTER, 1. September 2006 (2006-09-01), Seiten 1-5, XP031051633 ISBN: 978-1-4244-0062-1

## Beschreibung

Die vorliegende Erfindung betrifft Verfahren zur Steuerung von seitens in einem Mobilfunknetz mit einer aus Funkzellen aufgebauten zellularen Netzstruktur betreibbaren mobilen Endgeräten ausführbaren Anwendungen.

Darüber hinaus betrifft die vorliegende Erfindung ein mobiles Endgerät zur Nutzung in einem Mobilfunknetz mit einer aus Funkzellen aufgebauten zellularen Netzstruktur, insbesondere gemäß einem UMTS- und/oder LTE-Funknetzstandard, welches zur Ausführung wenigstens eines Teils eines erfindungsgemäßen Verfahrens ausgebildet und/oder eingerichtet ist.

Gegenstand der vorliegenden Erfindung ist ferner eine Sende-/Empfangsstation in einem Mobilfunknetz mit einer aus Funkzellen aufgebauten zellularen Netzstruktur, insbesondere gemäß einem UMTS- und/oder LTE-Funknetzstandard, welche zur Ausführung wenigstens eines Teils eines erfindungsgemäßen Verfahrens ausgebildet und/oder eingerichtet ist.

Bei im Stand der Technik bekannten, in Mobilfunknetzen betreibbaren mobilen Endgeräten, insbesondere Mobilfunktelefonen, werden im Rahmen von seitens des mobilen Endgerätes ausgeführten Anwendungen, nachfolgend auch Applikationen genannt, insbesondere eingehende Anrufe und/oder eingehende Mitteilungen eines Nachrichtendienstes eines Mobilfunknetzes, beispielsweise sogenannte SMS und/oder MMS, als Kommunikationsinformation akustisch durch Klingeltöne bzw. optisch durch Logos und/oder Videos als ein die Kommunikationsinformation repräsentierendes Signal seitens des mobilen Endgerätes wiedergegeben. Dabei sind üblicherweise beispielsweise die Lautstärke, die Anzahl an Signalwiederholungen und dergleichen Signalparameter von Kommunikationsinformationen repräsentierenden Signalen seitens des mobilen Endgerätes individuell einstellbar. Ferner sind entsprechende mobile Endgeräte mittlerweile ausgebildet, als Wiedergabeeinrichtung für akustische und/oder optische Daten, insbesondere Audio- und/oder Videodaten bzw. -informationen gemäß MPEG (MPEG: Moving Picture Experts Group), genutzt zu werden.
Im täglichen Gebrauch sind zahlreiche Situationen gegeben, in denen die Wiedergabe von Kommunikationsinformationen repräsentierenden Signalen und/oder die Wiedergabe von Audio- und/oder Videodaten seitens des mobilen Endgerätes störend ist bzw. empfunden wird, insbesondere in Besprechungen, im Theater, im Kino, in der Schule oder dergleichen Situationen. Gleiches gilt auch für andere, seitens eines mobilen Endgerätes ausgeführte bzw. ausführbare Anwendungen. In der Regel ist bei mobilen Endgeräten - unter anderem zu diesem Zwecke - die Möglichkeit gegeben, die Zuordnung und Wiedergabe von Kommunikationsinformationen repräsentierenden Signalen zu modifizieren bzw. eine Wiedergabe von akustischen Signalen seitens des mobilen Endgerätes generell zu unterdrücken, beispielsweise im Rahmen einer sogenannten "Stummschaltung", in der die akustische Wiedergabe von Signalen seitens des mobilen Endgerätes abgeschaltet wird. Ferner ist für den Nutzer eines mobilen Endgerätes die Möglichkeit gegeben, das mobile Endgerät selbst komplett auszuschalten. Nachteilig ist dabei insbesondere, dass der jeweilige Nutzer eines mobilen Endgerätes eine entsprechende Modifikation hinsichtlich der Wiedergabe von Signalen selbst seitens des mobilen Endgerätes vornehmen muss und der Umstand, das der Nutzer dies mitunter vergessen kann. Gleiches gilt für eine Wiederaktivierung der Anwendung (Applikation) des mobilen Endgerätes nach vorheriger Deaktivierung der Anwendung (Applikation).

Der Erfindung liegt in Anbetracht dieses Standes der Technik, wie beispielsweise der US 2006/0135091 A1, die Aufgabe zugrunde, die Steuerung von seitens in einem Mobilfunknetz mit einer aus Funkzellen aufgebauten zellularen Netzstruktur betreibbaren mobilen Endgeräten ausführbaren Anwendungen zu verbessern, insbesondere hinsichtlich einer Wiedergabe von Signalen seitens mobiler Endgeräte.

Zur technischen Lösung wird mit der vorliegenden Erfindung ein Verfahren zur Umsetzung in einem mobilen Endgerät gemäß Anspruch 1 vorgeschlagen. Erfindungsgemäß wird damit ein Verfahren zur Steuerung von seitens in einem Mobilfunknetz mit einer aus Funkzellen aufgebauten zellularen Netzstruktur betreibbaren mobilen Endgeräten ausführbaren Anwendungen (Applikationen) bereitgestellt, wobei vorteilhafterweise ein mobiles Endgerät in einer Funkzelle des Mobilfunknetzes über einen Signalisierungskanal zur Übertragung von Systeminformationen wenigstens einen Systeminformationsblock (SIB) empfängt, welcher wenigstens eine vorgebbare Information zur Steuerung des Verhaltens wenigstens einer Anwendung eines mobilen Endgerätes aufweist, aus dem empfangenen Systeminformationsblock (SIB) die wenigstens eine Information zur Steuerung des Verhaltens der wenigstens einen Anwendung eines mobilen Endgerätes extrahiert, die extrahierte Information zur Steuerung des Verhaltens der wenigstens einen Anwendung eines mobilen Endgerätes dekodiert und die wenigstens eine Anwendung des mobilen Endgerätes entsprechend der dekodierten Information zur Steuerung des Verhaltens der wenigstens einen Anwendung eines mobilen Endgerätes aktiviert.
Die Erfindung macht sich vorteilhafterweise die Erkenntnis zu Nutze, dass eine verbesserte Steuerung von seitens in einem Mobilfunknetz mit einer aus Funkzellen aufgebauten zellularen Netzstruktur betreibbaren mobilen Endgeräten ausführbaren Anwendungen (Applikationen) durch erfindungsgemäße Einführung wenigstens einer vorgebbaren Information zur Steuerung des Verhaltens wenigstens einer Anwendung eines mobilen Endgerätes in einem Systeminformationsblock (SIB), welcher über einen Signalisierungskanal zur Übertragung von Systeminformationen zwischen einem mobilen Endgerät und einer wenigstens eine Funkzelle des Mobilfunknetzes ausbildenden Sende-/Empfangsstation eingerichtet ist, erzielen lässt. Damit werden die bisher bekannten Standards für Systeminformationsblöcke (SIBs), die beispielsweise im 3GPP Standard 25.331 und 36.331 beschrieben sind, erfindungsgemäß verändert, insbesondere hinsichtlich einer Nutzung , in Mobilfunknetzen gemäß einem UMTS- und/oder LTE-Funknetzstandard.

Durch die erfindungsgemäße Verfahrensführung ist eine Verbesserung hinsichtlich der Steuerung von seitens in einem Mobilfunknetz mit einer aus Funkzellen aufgebauten zellularen Netzstruktur betreibbaren mobilen Endgeräten ausführbaren Anwendungen (Applikationen) insbesondere hinsichtlich der Funktionalität einer Wiedergabe von Signalen seitens des mobilen Endgerätes, gegeben, insbesondere da erfindungsgemäß eine mobilfunknetzseitige Steuerung der wenigstens einen Anwendung des mobilen Endgerätes in Abhängigkeit von dem Aufenthalt des mobilen Endgerätes in der vorteilhafterweise wenigstens einen vorgebbaren Funkzelle des Mobilfunknetzes erfolgt. So kann vorteilhafterweise zumindest teilautomatisiert sichergestellt werden, dass ein Nutzer des mobilen Endgerätes insbesondere die Aktivierung einer Stummschaltung des Lautsprechers des mobilen Endgerätes oder einer anderen Anwendung des mobilen Endgerätes nicht versehentlich vergisst. Erfindungsgemäß ist das mobile Endgeräte dabei vorteilhafterweise immer aktiv im Mobilfunknetz registriert und weiter nutzbar, entsprechend der aktivierten Anwendungssteuerung.

Gemäß einem vorteilhaften Vorschlag der Erfindung empfängt das mobile Endgerät den wenigstens einen Systeminformationsblock (SIB) bei Eintritt oder Anmeldung in einer Funkzelle des Mobilfunknetzes. Erfindungsgemäß wird der wenigstens einen Systeminformationsblock (SIB) bei Aufenthalt des mobilen Endgerätes in der Funkzelle entsprechend der mobilfunknetzseitig vorgesehenen Signalisierung des wenigstens einen Systeminformationsblock (SIB), das heißt insbesondere kontinuierlich oder in vorgebbaren zeitlichen Abständen und/oder Wiederholungen, empfangen und dementsprechend von einer die wenigstens eine Funkzelle des Mobilfunknetzes ausbildenden Sende-/Empfangsstation des Mobilfunknetzes gesendet. Bei einem Wechsel der Funkzelle empfängt das mobile Endgerät dann vorteilhafterweise entsprechende Systeminformationsblöcke dieser Funkzelle und aktiviert Anwendungen entsprechend der für diese Funkzelle gegebenen Vorgaben bzw. Einstellungen. Erfindungsgemäß wird so eine weitere Verbesserung hinsichtlich einer zumindest teilautomatischen Steuerung von Anwendungen des mobilen Endgerätes erzielt, insbesondere hinsichtlich der Handhabung für den Nutzer des mobilen Endgerätes.
Eine weitere Ausgestaltung der Erfindung schlägt ein Verfahren zur Steuerung von seitens in einem Mobilfunknetz mit einer aus Funkzellen aufgebauten zellularen Netzstruktur betreibbaren mobilen Endgeräten ausführbaren Anwendungen (Applikationen) gemäß Anspruch 3 vor. Gemäß einem weiteren vorteilhaften Vorschlag der Erfindung wird die Information zur Steuerung des Verhaltens wenigstens einer Anwendung eines mobilen Endgerätes an auswählbare mobile Endgeräte in der Funkzelle des Mobilfunknetzes oder an sämtliche mobilen Endgeräte in der Funkzelle des Mobilfunknetzes gesendet. Erfindungsgemäß unterliegt die wenigstens eine vorgebbare Information zur Steuerung des Verhaltens wenigstens einer Anwendung eines mobilen Endgerätes zeitabhängigen Vorgaben. So kann beispielsweise eine Aktivierung der wenigstens einen Anwendung des mobilen Endgerätes zu vorgebbaren Zeiten, beispielsweise Besprechungsterminen oder dergleichen Situationen, erfolgen. Erfindungsgemäß werden entsprechende Termine zumindest teilautomatisch aus einer Terminplanerfunktionalität des mobilen Endgerätes generiert, seitens des Mobilfunknetzes hinterlegt bzw. erfasst und mobilfunknetzseitig für eine erfindungsgemäße Anwendungssteuerung genutzt.
In einer weiteren erfindungsgemäßen Ausgestaltung der Erfindung unterliegt die wenigstens eine vorgebbare Information zur Steuerung des Verhaltens wenigstens einer Anwendung eines mobilen Endgerätes in der Person des Nutzers des mobilen Endgerätes begründeten Vorgaben. Eine bevorzugte Ausgestaltung der Erfindung ist gekennzeichnet durch eine Berücksichtigung des Nutzungsverhaltens des Nutzers des mobilen Endgerätes für in der Person des Nutzers des mobilen Endgerätes begründete Vorgaben. In der Person des Nutzers des mobilen Endgerätes begründete Vorgaben sind vorteilhafterweise Nutzungsvorlieben und/oder das Nutzungsverhalten des Nutzers des mobilen Endgerätes, von dem Nutzer des mobilen Endgerätes abonnierte bzw. eingerichtete Dienste im Mobilfunknetz, insbesondere Nachrichten- und/oder Mittelungsdienste des Mobilfunknetzbetreibers und/oder entsprechender Drittanbieter, oder dergleichen.
In einer weiteren vorteilhaften Ausgestaltung der Erfindung wird die wenigstens eine vorgebbare Information zur Steuerung des Verhaltens wenigstens einer Anwendung eines mobilen Endgerätes durch die Zugehörigkeit des Nutzers des mobilen Endgerätes zu einer seitens des Mobilfunknetzes eingerichteten Gruppe von Nutzern von in dem Mobilfunknetz nutzbaren Endgeräten bestimmt wird. Vorteilhafterweise wird die wenigstens eine vorgebbare Information zur Steuerung des Verhaltens wenigstens einer Anwendung eines mobilen Endgerätes durch wenigstens einen Funktionalitätszustand eines Endgerätes wenigstens eines Gruppenmitglieds der Gruppe des Nutzers des mobilen Endgerätes vorgegeben. Erfindungsgemäß wird so die Handhabung einer erfindungsgemäßen Anwendungssteuerung verbessert, insbesondere da beispielsweise bei Abteilungsbesprechungen mit den Abteilungsmitgliedern als Gruppe oder in der Schule mit dem Lehrer und den Schülern als Gruppe durch den Abteilungsleiter bzw. Besprechungsführer oder durch den Lehrer in der Schule die jeweilig gewünschten bzw. geforderten Anwendungen der mobilen Endgeräte der Gruppenmitglieder aktivierbar sind. Das wenigstens eine Gruppenmitglied übernimmt für die weiteren Gruppenmitglieder damit bezüglich der Anwendungssteuerung der mobilen Endgeräte quasi eine sogenannte Masterfunktion und die weiteren Gruppenmitglieder dementsprechend eine sogenannte "Slavefunktion" hinsichtlich einer hierarchischen Verwaltung bezüglich einer erfindungsgemäßen Steuerung von Anwendungen der mobilen Endgeräte der Gruppenmitglieder. Erfingungsgemäß ist die wenigstens eine Anwendung eines mobilen Endgerätes die optische und/oder akustische Anzeigefunktionalität einer optischen und/oder akustischen Anzeigeeinheit des mobilen Endgerätes und/oder ist die wenigstens eine Anwendung eines mobilen Endgerätes die optische und/oder akustische Eingabefunktionalität einer optischen und/oder akustischen Eingabeeinheit des mobilen Endgerätes.
Eine bevorzugte Ausgestaltung der Erfindung sieht vor, dass der Signalisierungskanal ein Broadcast Control Channel ist.
In einer weiteren vorteilhaften Ausgestaltung der Erfindung wird die wenigstens eine Information zur Steuerung des Verhaltens wenigstens einer Anwendung eines mobilen Endgerätes von dem Mobilfunknetzbetreiber und/oder einem Dienste in dem Mobilfunknetz Anbietenden vorgegeben.
Vorteilhafterweise wird die wenigstens eine vorgebbare Information zur Steuerung des Verhaltens wenigstens einer Anwendung eines mobilen Endgerätes in einer Datenbank verwaltet und/oder administriert, vorzugsweise in einer Datenbank des Mobilfunknetzes und/oder in einer mit dem Mobilfunknetz verbindbaren Datenbank. Vorteilhafterweise ist die Datenbank von dem Nutzer, dem Mobilfunknetzbetreiber und/oder einem Gruppenmitglied, insbesondere dem Gruppenleiter, verwaltet und/oder administriert werden, vorteilhafterweise über das Internet und/oder eine Dialogorientierte Schnittstelle des Mobilfunknetzes.
Zur technischen Lösung der eingangs genannte Aufgabe wird mit der vorliegenden Erfindung desweiteren ein mobiles Endgerät gemäß Anspruch 12 vorgeschlagen. Gegenstand der vorliegenden Erfindung ist ferner eine Sende-/Empfangsstation in einem Mobilfunknetz gemäß Anspruch 14. Weitere Einzelheiten, Merkmale und Vorteile der Erfindung werden nachfolgend anhand des in der Figur der Zeichnung dargestellten Ausführungsbeispiels der Erfindung näher erläutert. Dabei zeigt:

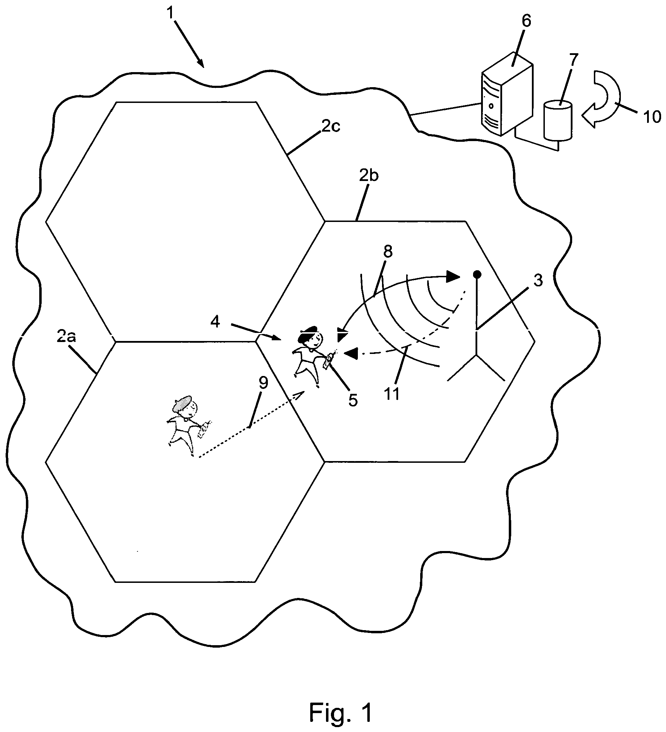

- Fig. 1: in einer schematischen Darstellung ein prinzipielles Ausführungsbeispiel für eine erfindungsgemäße Anwendungssteuerung.
Fig. 1 zeigt ein Mobilfunknetz 1 mit einer aus Funkzellen 2a, 2b, 2c aufgebauten zellularen Netzstruktur. Das Mobilfunknetz 1 ist vorliegend ein Mobilfunknetz gemäß einem UMTS- und/oder LTE-Funknetzstandard. In Fig. 1 ist das Mobilfunknetz 1 symbolisch durch eine Wolke dargestellt. Das Mobilfunknetz 1 weist weitere verschiedene Einrichtungen und/oder Systeme auf, welche in Fig. 1 aus Gründen der Übersichtlichkeit nicht separat dargestellt sind. Die Funkzellen 2a, 2b, 2c werden dabei insbesondere von Sende-/Empfangsstationen 3 des Mobilfunknetzes ausgebildet und unterhalten, von denen in Fig. 1 aus Gründen der Übersichtlichkeit exemplarisch eine dargestellt ist.

Weiter zeigt Fig. 1 einen Nutzer 4 mit einem in dem Mobilfunknetz 1 betreibbaren mobilen Endgerät 5. Das mobile Endgerät 5 ist vorliegend als Mobilfunktelefon ausgebildet.

Vorliegend ist seitens des Mobilfunknetzes 1 eine Recheneinrichtung (Server) 6 vorgesehen, welche eine Datenbank 7 aufweist beziehungsweise mit der Datenbank 7 verbindbar ist. Die Recheneinrichtung 6 mit der Datenbank 7 ist vorliegend im Mobilfunknetz 1 angeordnet beziehungsweise mit diesem verbindbar. Zur erfindungsgemäßen Steuerung von seitens des mobilen Endgerätes 5 ausführbaren bzw. ausgeführten Anwendungen (Applikationen) ist in der mobilfunknetzseitigen Datenbank 7 vorliegend von einer weiteren, hier nicht dargestellten Person und/oder Einrichtung, beispielsweise einem Gruppenleiter, die wenigstens eine vorgebbare Information zur Steuerung des Verhaltens wenigstens einer Anwendung eines mobilen Endgerätes 5 des Nutzers 4 hinterlegbar. Die Datenbank 7 ist dabei von einer weiteren, hier nicht dargestellten Person und/oder Einrichtung verwaltbar und/oder administrierbar.

Bei Aufenthalt des mobilen Endgerätes 5 des Nutzers 4 in wenigstens einer vorgebbaren Funkzelle des Mobilfunknetzes 1 empfängt das mobile Endgerät 5 wenigstens eines Systeminformationsblocks (SIB) über einen Signalisierungskanal, extrahiert dann aus dem empfangenen Systeminformationsblock (SIB) wenigstens eine Information zur Steuerung wenigstens einer Anwendung des mobilen Endgeräts 5, dekodiert die extrahierte Information und aktiviert wenigstens eine Anwendung des mobilen Endgerätes 5 entsprechend der dekodierten Information.

Bei dem vorliegend in Fig. 1 dargestellten Ausführungsbeispiel wird bei Erreichbarkeit und Funkversorgung des mobilen Endgerätes 5 des Nutzers 4 in der Funkzelle 2b automatisch der erfindungsgemäße Systeminformationsblock (SIB), welcher von der Sende-/Empfangsstation 3 über einen Signalisierungskanal versendet wird, empfangen. Fig. 1 zeigt dabei, wie der Nutzer 4 mit seinem mobilen Endgerät 5 von der Funkzelle 2a in die Funkzelle 2b wechselt. In Fig. 1 ist der Funkzellenwechsel des Nutzers 4 bzw. des mobilen Endgerätes 5 des Nutzers 4 von der Funkzelle 2a des Mobilfunknetzes 1 in die Funkzelle 2b des Mobilfunknetzes 1 symbolisch durch den hellgrau dargestellten Nutzer 4 mit mobilem Endgerät 5 und den mit dem Bezugszeichen 9 gekennzeichneten gestrichelten Pfeil dargestellt.

Der Funkzellenwechsel wird seitens des Mobilfunknetzes 1 erfasst, vorliegend durch die Erreichbarkeit des mobilen Endgerätes 5 des Nutzers 4 in der Funkzelle 2b (in Fig. 1 symbolisch durch den mit dem Bezugszeichen 8 gekennzeichneten Doppelpfeil dargestellt). Die Sende-/Empfangsstation 3 des Mobilfunknetzes 1 sendet daraufhin - vorliegend mittels Cell Broadcast - über einen Signalisierungskanal zur Übertragung von Systeminformationen wenigstens einen Systeminformationsblock (SIB), welcher wenigstens eine vorgebbare Information zur Steuerung des Verhaltens wenigstens einer Anwendung des mobilen Endgerätes 5 aufweist. Die Information zur Steuerung des Verhaltens wenigstens einer Anwendung des mobilen Endgerätes wird dabei zuvor oder währenddessen durch mobilfunknetzseitige Abfrage der Datenbank 7 (in Fig. 1 symbolisch durch den mit dem Bezugszeichen 10 gekennzeichneten Pfeil dargestellt) bestimmt.

Das mobile Endgerät 5 in der Funkzelle 2b des Mobilfunknetzes 1 empfängt über einen Signalisierungskanal zur Übertragung von Systeminformationen den wenigstens einen Systeminformationsblock (SIB), welcher wenigstens eine vorgebbare Information zur Steuerung des Verhaltens wenigstens einer Anwendung des mobilen Endgerätes 5 aufweist (in Fig. 1 symbolisch durch den mit dem Bezugszeichen 11 gekennzeichneten Pfeil dargestellt). Aus dem empfangenen Systeminformationsblock (SIB) wird dann seitens des mobilen Endgerätes 5 die wenigstens eine Information zur Steuerung des Verhaltens der wenigstens einen Anwendung des mobilen Endgerätes 5 extrahiert. Die extrahierte Information zur Steuerung des Verhaltens der wenigstens einen Anwendung des mobilen Endgerätes 5 wird dann seitens des mobilen Endgerätes 5 dekodiert und die wenigstens eine Anwendung des mobilen Endgerätes 5 entsprechend der dekodierten Information zur Steuerung des Verhaltens der wenigstens einen Anwendung des mobilen Endgerätes 5 aktiviert. Vorliegend ist die Anwendung beispielhaft insbesondere zur Aktivierung der Stummschaltung eines Lautsprechers des mobilen Endgerätes 5 für eingehende Anrufe und/oder Nachrichten eingerichtet.

Die Systeminformationen weisen dabei vorliegend einen Steuerinformationsblock zur Steuerung der Aktivierung der wenigstens einen Anwendung des mobilen Endgerätes auf, welcher vorteilhafterweise als ein Aktivierungsbit bzw. -flag in den Systeminformationen integriert bzw. enthalten ist. Bei einem Funkzellenwechsel wird von der für die neue Funkzelle dann zuständigen Sende-/Empfangsstation vorteilhafterweise ein entsprechendes Aktivierungsbit bzw. -flag in bzw. mit dem von dieser Sende-/Empfangsstation über einen Signalisierungskanal versendeten Systeminformationsblock (SIB), versendet. Dabei werden dann vorteilhafterweise automatisch seitens des mobilen Endgerätes die in dieser Funkzelle jeweils gültigen bzw. gewünschten Anwendungen erfindungsgemäß aktiviert.

Das in der Figur der Zeichnung dargestellte und die in Zusammenhang mit dieser beschriebenen Ausführungsbeispiele der Erfindung dienen lediglich der Erläuterung der Erfindung und sind für diese nicht beschränkend.

### Bezugszeichenliste

- 1: Mobilfunknetz
- 2a: Funkzelle (Mobilfunknetz (1))
- 2b: Funkzelle (Mobilfunknetz (1))
- 2c: Funkzelle (Mobilfunknetz (1))
- 3: Sende-/Empfangsstation (Mobilfunknetz (1))
- 4: Nutzer (mobiles Endgerät (5))
- 5: mobiles Endgerät
- 6: Recheneinrichtung/Server (Mobilfunknetz (1))
- 7: Datenbank (Recheneinrichtung/Server (6))
- 8: Erreichbarkeit mobiles Endgerät (5) im Funkversorgungsbereich der zuständigen Sende-/Empfangsstation (3) des Mobilfunknetzes (1)
- 9: Funkzellenwechsel durch Bewegung mobiles Endgerät (5) von Funkzelle 2a in Funkzelle 2b
- 10: Datenbankabfrage/Setzen bzw. Löschen Bit/Flag im Steuerinformationsblock
- 11: Senden/Empfangen Systeminformationen mit Steuerinformationsblock zur Aktivierung von Anwendungen des mobilen Endgerätes (5)

## Patentansprüche

1. Verfahren zur Umsetzung in einem mobilen Endgerät (5) für ein aus Funkzellen (2a, 2b, 2c) aufgebautes zellulares Mobilfunknetz (1), insbesondere gemäß einem UMTS- und/oder LTE-Funknetzstandard, mit folgenden Verfahrensschritten:
- Empfangen wenigstens eines Systeminformationsblocks (SIB) über einen Signalisierungskanal,
- Extrahieren wenigstens einer vorgebbaren Information zur Steuerung wenigstens einer Anwendung des mobilen Endgeräts (5) aus dem empfangenen Systeminformationsblock (SIB),
- Dekodieren der extrahierten Information und
- Aktivieren der wenigstens einen Anwendung entsprechend der dekodierten Information,
wobei
die wenigstens eine Anwendung des mobilen Endgerätes (5) die optische und/oder akustische Anzeigefunktionalität einer optischen und/oder akustischen Anzeigeeinheit des mobilen Endgerätes (5) ist und/oder
die wenigstens eine Anwendung des mobilen Endgerätes (5) die optische und/oder akustische Eingabefunktionalität einer optischen und/oder akustischen Eingabeeinheit des mobilen Endgerätes (5) ist,
**dadurch gekennzeichnet, dass**
die wenigstens eine vorgebbare Information zur Steuerung des Verhaltens wenigstens einer Anwendung des mobilen Endgerätes (5) zeitabhängigen Vorgaben unterliegt,
wobei eine Aktivierung der wenigstens einen Anwendung des mobilen Endgerätes (5) zu vorgebbaren Zeiten erfolgt, indem Termine zumindest teilautomatisch aus einer Terminplanerfunktionalität des mobilen Endgerätes (5) generiert, seitens des Mobilfunknetzes (1) hinterlegt bzw. erfasst und mobilfunknetzseitig zur Anwendungssteuerung genutzt werden.

2. Verfahren nach Anspruch 1, **dadurch gekennzeichnet, dass** das mobile Endgerät (5) den wenigstens einen Systeminformationsblock (SIB) bei Eintritt oder Anmeldung in einer Funkzelle (2a, 2b, 2c) des Mobilfunknetzes (1) empfängt.

3. Verfahren zur Steuerung von seitens in einem Mobilfunknetz (1) mit einer aus Funkzellen (2a, 2b, 2c) aufgebauten zellularen Netzstruktur betreibbaren mobilen Endgeräten (5), insbesondere gemäß einem UMTS- und/oder LTE-Funknetzstandard, ausführbaren Anwendungen (Applikationen),
wobei eine wenigstens eine Funkzelle (2b) des Mobilfunknetzes (1) ausbildende Sende-/Empfangsstation (3) des Mobilfunknetzes (1) über einen Signalisierungskanal zur Übertragung von Systeminformationen wenigstens einen Systeminformationsblock (SIB) sendet, welcher wenigstens eine vorgebbare Information zur Steuerung des Verhaltens wenigstens einer Anwendung eines mobilen Endgerätes (5) aufweist,
und wobei
die wenigstens eine Anwendung des mobilen Endgerätes (5) die optische und/oder akustische Anzeigefunktionalität einer optischen und/oder akustischen Anzeigeeinheit des mobilen Endgerätes (5) ist
und/oder
die wenigstens eine Anwendung des mobilen Endgerätes (5) die optische und/oder akustische Eingabefunktionalität einer optischen und/oder akustischen Eingabeeinheit des mobilen Endgerätes (5) ist,
**dadurch gekennzeichnet, dass**
die wenigstens eine vorgebbare Information zur Steuerung des Verhaltens wenigstens einer Anwendung des mobilen Endgerätes (5) zeitabhängigen Vorgaben unterliegt,
wobei eine Aktivierung der wenigstens einen Anwendung des mobilen Endgerätes (5) zu vorgebbaren Zeiten erfolgt, indem Termine zumindest teilautomatisch aus einer Terminplanerfunktionalität des mobilen Endgerätes (5) generiert, seitens des Mobilfunknetzes (1) hinterlegt bzw. erfasst und mobilfunknetzseitig zur Anwendungssteuerung genutzt werden.

4. Verfahren nach Anspruch 3, **dadurch gekennzeichnet, dass** die Information zur Steuerung des Verhaltens wenigstens einer Anwendung des mobilen Endgerätes an auswählbare mobile Endgeräte in der Funkzelle (2b) des Mobilfunknetzes (1) oder an sämtliche mobilen Endgeräte in der Funkzelle (2b) des Mobilfunknetzes (1) gesendet wird.

5. Verfahren nach einem der Ansprüche 1 bis 4, **dadurch gekennzeichnet, dass** die wenigstens eine vorgebbare Information zur Steuerung des Verhaltens wenigstens einer Anwendung des mobilen Endgerätes (5) in der Person des Nutzers (4) des mobilen Endgerätes (5) begründeten Vorgaben unterliegt.

6. Verfahren nach Anspruch 5, **gekennzeichnet durch** eine Berücksichtigung des Nutzungsverhaltens des Nutzers (4) des mobilen Endgerätes (5) für in der Person des Nutzers (4) des mobilen Endgerätes (5) begründete Vorgaben.

7. Verfahren nach einem der Ansprüche 1 bis 6, **dadurch gekennzeichnet, dass** die wenigstens eine vorgebbare Information zur Steuerung des Verhaltens wenigstens einer Anwendung des mobilen Endgerätes (5) durch die Zugehörigkeit des Nutzers (4) des mobilen Endgerätes (5) zu einer seitens des Mobilfunknetzes (1) eingerichteten Gruppe von Nutzern von in dem Mobilfunknetz (1) nutzbaren Endgeräten bestimmt wird.

8. Verfahren nach Anspruch 7, **dadurch gekennzeichnet, dass** die wenigstens eine vorgebbare Information zur Steuerung des Verhaltens wenigstens einer Anwendung des mobilen Endgerätes (5) durch wenigstens einen Funktionalitätszustand eines Endgerätes wenigstens eines Gruppenmitglieds der Gruppe des Nutzers (4) des mobilen Endgerätes (5) vorgegeben wird.

9. Verfahren nach einem der Ansprüche 1 bis 8, **dadurch gekennzeichnet, dass** der Signalisierungskanal ein Broadcast Control Channel ist.

10. Verfahren nach einem der Ansprüche 1 bis 9, **dadurch gekennzeichnet, dass** die wenigstens eine Information zur Steuerung des Verhaltens wenigstens einer Anwendung des mobilen Endgerätes (5) von dem Mobilfunknetzbetreiber und/oder einem Dienste in dem Mobilfunknetz Anbietenden vorgegeben wird.

11. Verfahren nach einem der Ansprüche 1 bis 10, **dadurch gekennzeichnet, dass** die wenigstens eine vorgebbare Information zur Steuerung des Verhaltens wenigstens einer Anwendung des mobilen Endgerätes (5) in einer Datenbank (7) verwaltet und/oder administriert wird, vorzugsweise in einer Datenbank (7) des Mobilfunknetzes (1) und/oder in einer mit dem Mobilfunknetz (1) verbindbaren Datenbank (7).

12. Mobiles Endgerät (5) zur Nutzung in einem Mobilfunknetz (1) mit einer aus Funkzellen (2a, 2b, 2c) aufgebauten zellularen Netzstruktur, insbesondere gemäß einem UMTS- und/oder LTE-Funknetzstandard, **dadurch gekennzeichnet, dass** das mobile Endgerät (5) konfiguriert ist, über einen Signalisierungskanal zur Übertragung von Systeminformationen wenigstens einen Systeminformationsblock (SIB), welcher wenigstens eine vorgebbare Information zur Steuerung des Verhaltens wenigstens einer Anwendung des mobilen Endgerätes (5) aufweist, zu empfangen, aus dem empfangenen Systeminformationsblock (SIB) die wenigstens eine Information zur Steuerung des Verhaltens der wenigstens einen Anwendung des mobilen Endgerätes (5) zu extrahieren, die extrahierte Information zur Steuerung des Verhaltens der wenigstens einen Anwendung des mobilen Endgerätes (5) zu dekodieren und die wenigstens eine Anwendung des mobilen Endgerätes (5) entsprechend der dekodierten Information zur Steuerung des Verhaltens der wenigstens einen Anwendung des mobilen Endgerätes (5) zu aktivieren,
wobei
die wenigstens eine Anwendung des mobilen Endgerätes (5) die optische und/oder akustische Anzeigefunktionalität einer optischen und/oder akustischen Anzeigeeinheit des mobilen Endgerätes (5) ist und/oder
die wenigstens eine Anwendung des mobilen Endgerätes (5) die optische und/oder akustische Eingabefunktionalität einer optischen und/oder akustischen Eingabeeinheit des mobilen Endgerätes (5) ist,
**dadurch gekennzeichnet, dass**
die wenigstens eine vorgebbare Information zur Steuerung des Verhaltens wenigstens einer Anwendung des mobilen Endgerätes (5) zeitabhängigen Vorgaben unterliegt,
wobei eine Aktivierung der wenigstens einen Anwendung des mobilen Endgerätes (5) zu vorgebbaren Zeiten vorgesehen ist, indem Termine zumindest teilautomatisch aus einer Terminplanerfunktionalität des mobilen Endgerätes (5) generierbar, seitens des Mobilfunknetzes (1) hinterlegbar bzw. erfassbar und mobilfunknetzseitig zur Anwendungssteuerung nutzbar sind.

13. Mobiles Endgerät (5) nach Anspruch 12, **dadurch gekennzeichnet, dass** dieses zur Ausführung der seitens des mobilen Endgerätes (5) auszuführenden Verfahrensschritte eines Verfahrens nach einem der Ansprüche 1 bis 11 ausgebildet und/oder eingerichtet ist.

14. Sende-/Empfangsstation in einem Mobilfunknetz (1) mit einer aus Funkzellen (2a, 2b, 2c) aufgebauten zellularen Netzstruktur, insbesondere gemäß einem UMTS- und/oder LTE-Funknetzstandard, **dadurch gekennzeichnet, dass** die Sende-/Empfangsstation konfiguriert ist, über einen Signalisierungskanal zur Übertragung von Systeminformationen wenigstens einen Systeminformationsblock (SIB), welcher wenigstens eine vorgebbare Information zur Steuerung des Verhaltens wenigstens einer Anwendung eines mobilen Endgerätes (5) aufweist, zu senden,
wobei
die wenigstens eine Anwendung des mobilen Endgerätes (5) die optische und/oder akustische Anzeigefunktionalität einer optischen und/oder akustischen Anzeigeeinheit des mobilen Endgerätes (5) ist
und/oder
die wenigstens eine Anwendung des mobilen Endgerätes (5) die optische und/oder akustische Eingabefunktionalität einer optischen und/oder akustischen Eingabeeinheit des mobilen Endgerätes (5) ist,
**dadurch gekennzeichnet, dass**
die wenigstens eine vorgebbare Information zur Steuerung des Verhaltens wenigstens einer Anwendung des mobilen Endgerätes (5) zeitabhängigen Vorgaben unterliegt,
wobei eine Aktivierung der wenigstens einen Anwendung des mobilen Endgerätes (5) zu vorgebbaren Zeiten vorgesehen ist, indem Termine zumindest teilautomatisch aus einer Terminplanerfunktionalität des mobilen Endgerätes (5) generierbar, seitens des Mobilfunknetzes (1) hinterlegbar bzw. erfassbar und mobilfunknetzseitig zur Anwendungssteuerung nutzbar sind.

15. Sende-/Empfangsstation nach Anspruch 14, **dadurch gekennzeichnet, dass** diese zur Ausführung der seitens der Sende-/Empfangsstation auszuführenden Verfahrensschritte eines Verfahrens nach einem der Ansprüche 1 bis 11 ausgebildet und/oder eingerichtet ist.

## Claims

1. A method to be carried out in a mobile terminal (5) for a cellular mobile radio network (1) composed of radio cells (2a, 2b, 2c), in particular according to a UMTS and/or LTE radio network standard, comprising the following process steps:
- receiving at least one system information block (SIB) via a signalization channel,
- extracting at least one predeterminable information item for controlling at least one application of the mobile terminal (5) from the received system information block (SIB),
- decoding the extracted information item and
- activating the at least one application according to the decoded information item,
wherein
the at least one application of the mobile terminal (5) is the optical and/or acoustic display functionality of an optical and/or acoustic display unit of the mobile terminal (5)
and/or
the at least one application of the mobile terminal (5) is the optical and/or acoustic input functionality of an optical and/or acoustic input unit of the mobile terminal (5),
**characterized in that**
the at least one predeterminable information item for controlling the behaviour of at least one application of the mobile terminal (5) is subject to time-dependent demands,
wherein the at least one application of the mobile terminal (5) will be activated at predeterminable times, **in that** dates will be generated in an at least semi-automatic manner by a scheduling functionality of the mobile terminal (5), be stored or recorded by means of the mobile radio network (1) and be used by the mobile radio network for controlling the application.

2. A method according to claim 1, **characterized in that** the mobile terminal (5) will receive the at least one system information block (SIB) upon entering or registering in a radio cell (2a, 2b, 2c) of the mobile radio network (1).

3. A method for controlling applications which can be carried out by mobile terminals (5) that can be operated in a mobile radio network having a cellular network structure composed of radio cells (2a, 2b, 2c), in particular according to a UMTS and/or LTE radio network standard,
wherein at least one sender/receiver station (3) of the mobile radio network (1) which forms at least one radio cell (2b) of the mobile radio network (1) will send at least one system information block (SIB) via a signalization channel for transmitting system information, which system information block (SIB) comprises at least one predeterminable information item for controlling the behaviour of at least one application of a mobile terminal (5),
and wherein
the at least one application of the mobile terminal (5) is the optical and/or acoustic display functionality of an optical and/or acoustic display unit of the mobile terminal (5)
and/or
the at least one application of the mobile terminal (5) is the optical and/or acoustic input functionality of an optical and/or acoustic input unit of the mobile terminal (5),
**characterized in that**
the at least one predeterminable information item for controlling the behaviour of at least one application of the mobile terminal (5) is subject to time-dependent demands,
wherein the at least one application of the mobile terminal (5) will be activated at predeterminable times, **in that** dates will be generated in an at least semi-automatic manner by a scheduling functionality of the mobile terminal (5), be stored or recorded by means of the mobile radio network (1) and be used by the mobile radio network for controlling the application.

4. A method according to claim 3, **characterized in that** the information item for controlling the behaviour of at least one application of the mobile terminal will be sent to selectable mobile terminals in the radio cell (2b) of the mobile radio network (1) or to all mobile terminals in the radio cell (2b) of the mobile radio network (1).

5. A method according to one of the claims 1 to 4, **characterized in that** the at least one predeterminable information item for controlling the behaviour of at least one application of the mobile terminal (5) is subject to demands deriving from the person of the user (4) of the mobile terminal (5).

6. A method according to claim 5, **characterized by** a consideration of the usage behaviour of the user (4) of the mobile terminal (5) for the demands deriving from the person of the user (4) of the mobile terminal (5).

7. A method according to one of the claims 1 to 6, **characterized in that** the at least one predeterminable information item for controlling the behaviour of at least one application of the mobile terminal (5) will be determined by the belonging of the user (4) of the mobile terminal (5) to a group of users of terminals usable in the mobile radio network (1), which group has been set up by the mobile radio network (1).

8. A method according to claim 7, **characterized in that** the at least one predeterminable information item for controlling the behaviour of at least one application of the mobile terminal (5) will be predetermined by at least one functionality state of a terminal of at least one group member of the group of the user (4) of the mobile terminal (5).

9. A method according to one of the claims 1 to 8, **characterized in that** the signalization channel is a broadcast control channel.

10. A method according to one of the claims 1 to 9, **characterized in that** the at least one information item for controlling the behaviour of at least one application of the mobile terminal (5) will be predefined by the mobile radio network provider and/or by a provider of services in the mobile radio network.

11. A method according to one of the claims 1 to 10, **characterized in that** the at least one predeterminable information item for controlling the behaviour of at least one application of the mobile terminal (5) will be managed and/or administrated in a data base (7), preferably in a data base (7) of the mobile radio network (1) and/or in a data base (7) which can be connected to the mobile radio network (1).

12. A mobile terminal (5) for the use in a mobile radio network (1) having a cellular network structure composed of radio cells (2a, 2b, 2c), in particular according to a UMTS and/or LTE radio network standard, **characterized in that** the mobile terminal (5) is configured to receive at least one system information block (SIB) via a signalization channel for transmitting system information, which system information block (SIB) at least comprises one predeterminable information item for controlling the behaviour of at least one application of the mobile terminal (5), to extract the at least one information item for controlling the behaviour of the at least one application of the mobile terminal (5) from the received system information block (SIB), to decode the extracted information item for controlling the behaviour of the at least one application of the mobile terminal (5) and to activate the at least one application of the mobile terminal (5) according to the decoded information item for controlling the behaviour of the at least one application of the mobile terminal (5),
wherein
the at least one application of the mobile terminal (5) is the optical and/or acoustic display functionality of an optical and/or acoustic display unit of the mobile terminal (5)
and/or
the at least one application of the mobile terminal (5) is the optical and/or acoustic input functionality of an optical and/or acoustic input unit of the mobile terminal (5),
**characterized in that**
the at least one predeterminable information item for controlling the behaviour of at least one application of the mobile terminal (5) is subject to time-dependent demands,
wherein an activation of the at least one application of the mobile terminal (5) is provided at predeterminable times, **in that** dates can be generated in an at least semi-automatic manner by a scheduling functionality of the mobile terminal (5), be stored or recorded by means of the mobile radio network (1) and be used by the mobile radio network for controlling the application.

13. A mobile terminal (5) according to claim 12, **characterized in that characterized in that** this one is designed and/or adapted to carry out the method steps of the mobile terminal (5) of a method according to one of the claims 1 to 11.

14. A sender/receiver station in a mobile radio network (1) having a cellular network structure composed of radio cells (2a, 2b, 2c), in particular according to a UMTS and/or LTE radio network standard, **characterized in that** the sender/receiver station is configured to send at least one system information block (SIB) via a signalization channel for transmitting system information, which system information block (SIB) at least comprises one predeterminable information item for controlling the behaviour of at least one application of the mobile terminal (5),
wherein
the at least one application of the mobile terminal (5) is the optical and/or acoustic display functionality of an optical and/or acoustic display unit of the mobile terminal (5)
and/or
the at least one application of the mobile terminal (5) is the optical and/or acoustic input functionality of an optical and/or acoustic input unit of the mobile terminal (5),
**characterized in that**
the at least one predeterminable information item for controlling the behaviour of at least one application of the mobile terminal (5) is subject to time-dependent demands,
wherein an activation of the at least one application of the mobile terminal (5) is provided at predeterminable times, **in that** dates can be generated in an at least semi-automatic manner by a scheduling functionality of the mobile terminal (5), be stored or recorded by means of the mobile radio network (1) and be used by the mobile radio network for controlling the application.

15. A sender/receiver station according to claim 14, **characterized in that characterized in that** this one is designed and/or adapted to carry out the method steps of the sender/receiver station of a method according to one of the claims 1 to 11.

## Revendications

1. Procédé destiné à être exécuté dans un terminal mobile (5) pour un réseau radio mobile (1) cellulaire composé de cellules radio (2a, 2b, 2c), notamment selon un standard de réseau radio UMTS et/ou LTE, comprenant les étapes de procédé suivantes de :
- recevoir au moins un bloc d'informations de système (SIB) via un canal de signalisation,
- extraire au moins une information prédéterminable pour commander au moins une application du terminal mobile (5) du bloc d'informations de système (SIB) reçu,
- décoder l'information extraite et
- activer l'au moins une application selon l'information décodée,
dans lequel
l'au moins une application du terminal mobile (5) est la fonctionnalité d'affichage optique et/ou acoustique d'une unité d'affichage optique et/ou acoustique du terminal mobile (5)
et/ou
l'au moins une application du terminal mobile (5) est la fonctionnalité d'affichage optique et/ou acoustique d'une unité d'entrée optique et/ou acoustique du terminal mobile (5),/
**caractérisé en ce que**
l'au moins une information prédéterminable pour commander le comportement d'au moins une application du terminal mobile (5) est soumis à des spécifications dépendant du temps,
une activation de l'au moins une application du terminal mobile (5) étant réalisée à des moments prédéterminables en générant des dates fixées de manière au moins partiellement automatique par une fonctionnalité d'agenda du terminal mobile (5), en les stockant ou saisissant par moyen du réseau radio mobile (1) et en les utilisant par le réseau radio mobile pour la commande d'applications.

2. Procédé selon la revendication 1, **caractérisé en ce que** le terminal mobile (5) reçoit l'au moins un bloc d'informations de système (SIB) en entrant ou en s'inscrivant dans une cellule radio (2a, 2b, 2c) du réseau radio mobile.

3. Procédé de commande des applications, qui sont susceptibles d'être exécutées par des terminaux mobiles (5), qui fonctionnent dans un réseau radio mobile comprenant une structure de réseau cellulaire composée de cellules radio (2a, 2b, 2c), notamment selon un standard de réseau radio UMTS et/ou LTE,
dans lequel au moins une station d'émetteur/récepteur (3) du réseau radio mobile (1), laquelle forme au moins une cellule radio (2b) du réseau radio mobile (1), envoie au moins un bloc d'informations de système (SIB) via un canal de signalisation pour transmettre des informations de système, lequel bloc d'informations de système (SIB) comprend au moins une information prédéterminable pour commander le comportement d'au moins une application d'un terminal mobile (5),
et dans lequel
l'au moins une application du terminal mobile (5) est la fonctionnalité d'affichage optique et/ou acoustique d'une unité d'affichage optique et/ou acoustique du terminal mobile (5)
et/ou
l'au moins une application du terminal mobile (5) est la fonctionnalité d'affichage optique et/ou acoustique d'une unité d'entrée optique et/ou acoustique du terminal mobile (5),/
**caractérisé en ce que**
l'au moins une information prédéterminable pour commander le comportement d'au moins une application du terminal mobile (5) est soumis à des spécifications dépendant du temps,
une activation de l'au moins une application du terminal mobile (5) étant réalisée à des moments prédéterminables en générant des dates fixées de manière au moins partiellement automatique par une fonctionnalité d'agenda du terminal mobile (5), en les stockant ou saisissant par moyen du réseau radio mobile (1) et en les utilisant par le réseau radio mobile pour la commande d'applications.

4. Procédé selon la revendication 3, **caractérisé en ce que** l'information pour commander le comportement d'au moins une application du terminal mobile est envoyée à des terminaux mobiles sélectionnables dans la cellule radio (2b) du réseau radio mobile (1) ou à tous les terminaux mobiles dans la cellule radio (2b) du réseau radio mobile (1).

5. Procédé selon l'une des revendications 1 à 4, **caractérisé en ce que** l'au moins une information prédéterminable pour commander le comportement d'au moins une application du terminal mobile (5) est soumise à des spécifications fondées sur la personne de l'utilisateur (4) du terminal mobile (4).

6. Procédé selon la revendication 5, **caractérisé par** une considération du comportement de l'utilisateur (4) du terminal mobile (5) pour des spécifications fondées sur la personne de l'utilisateur (4) du terminal mobile (4).

7. Procédé selon l'une des revendications 1 à 6, **caractérisé en ce que** l'au moins une information prédéterminable pour commander le comportement d'au moins une application du terminal mobile (5) est déterminée par l'appartenance de l'utilisateur (4) du terminal mobile (5) à un groupe d'utilisateurs de terminaux utilisables dans le réseau radio mobile (1), lequel groupe a été établi par le réseau radio mobile (1).

8. Procédé selon la revendication 7, **caractérisé en ce que** l'au moins une information prédéterminable pour commander le comportement d'au moins une application du terminal mobile (5) est prédéterminée par au moins un état de fonctionnalité d'un terminal d'au moins un membre de groupe du groupe de l'utilisateur (4) du terminal mobile (5).

9. Procédé selon l'une des revendications 1 à 8, **caractérisé en ce que** le canal de signalisation est un broadcast control channel.

10. Procédé selon l'une des revendications 1 à 9, **caractérisé en ce que** l'au moins une information pour commander le comportement d'au moins une application du terminal mobile (5) est prédéterminée par l'opérateur du réseau radio mobile et/ou par un opérateur, qui offre des services dans le réseau radio mobile.

11. Procédé selon l'une des revendications 1 à 10, **caractérisé en ce que** l'au moins une information pour commander le comportement d'au moins une application du terminal mobile (5) est gérée et/ou administrée dans une base de données (7), de préférence dans une base de données (7) du réseau radio mobile (1) et/ou dans une base de données (7) susceptible d'être reliée au réseau radio mobile (1).

12. Terminal mobile (5) destiné à l'utilisation dans un réseau radio mobile (1)
comprenant une structure de réseau cellulaire composée de cellules radio (2a, 2b, 2c), notamment selon un standard de réseau radio UMTS et/ou LTE, **caractérisé en ce que** le terminal mobile (5) est configuré pour recevoir au moins un bloc d'informations de système (SIB) via un canal de signalisation pour transmettre des informations de système, lequel bloc d'informations de système (SIB) comprend au moins une information prédéterminable pour commander le comportement d'au moins une application d'un terminal mobile (5), pour extraire l'au moins une information pour commander le comportement de l'au moins une application du terminal mobile (5) du bloc d'informations de système (SIB) reçu, pour décoder l'information extraite pour commander le comportement de l'au moins une application du terminal mobile (5) et pour activer au moins une application du terminal mobile (5) selon l'information décodée pour commander le comportement de l'au moins une application du terminal mobile (5),
dans lequel
l'au moins une application du terminal mobile (5) est la fonctionnalité d'affichage optique et/ou acoustique d'une unité d'affichage optique et/ou acoustique du terminal mobile (5)
et/ou
l'au moins une application du terminal mobile (5) est la fonctionnalité d'affichage optique et/ou acoustique d'une unité d'entrée optique et/ou acoustique du terminal mobile (5),/
**caractérisé en ce que**
l'au moins une information prédéterminable pour commander le comportement d'au moins une application du terminal mobile (5) est soumis à des spécifications dépendant du temps,
une activation de l'au moins une application du terminal mobile (5) étant prévue à des moments prédéterminables en pouvant générer des dates fixées de manière au moins partiellement automatique par une fonctionnalité d'agenda du terminal mobile (5), en pouvant les stocker ou saisir par moyen du réseau radio mobile (1) et en pouvant les utiliser par le réseau radio mobile pour la commande d'applications.

13. Terminal mobile (5) selon la revendication 12, **caractérisé en ce que** celui-ci est configuré pour et/ou adapté à exécuter les étapes de procédé du terminal mobile (5) d'un procédé selon l'une des revendications 1 à 11.

14. Station émetteur/récepteur dans un réseau radio mobile (1) comprenant une structure de réseau cellulaire composée de cellules radio (2a, 2b, 2c), notamment selon un standard de réseau radio UMTS et/ou LTE, **caractérisé en ce que** la station émetteur/récepteur est configurée pour recevoir au moins un bloc d'informations de système (SIB) via un canal de signalisation pour transmettre des informations de système, lequel bloc d'informations de système (SIB) comprend au moins une information prédéterminable pour commander le comportement d'au moins une application d'un terminal mobile (5),
dans lequel
l'au moins une application du terminal mobile (5) est la fonctionnalité d'affichage optique et/ou acoustique d'une unité d'affichage optique et/ou acoustique du terminal mobile (5)
et/ou
l'au moins une application du terminal mobile (5) est la fonctionnalité d'affichage optique et/ou acoustique d'une unité d'entrée optique et/ou acoustique du terminal mobile (5),/
**caractérisé en ce que**
l'au moins une information prédéterminable pour commander le comportement d'au moins une application du terminal mobile (5) est soumis à des spécifications dépendant du.temps,
une activation de l'au moins une application du terminal mobile (5) étant prévue à des moments prédéterminables en pouvant générer des dates fixées de manière au moins partiellement automatique par une fonctionnalité d'agenda du terminal mobile (5), en pouvant les stocker ou saisir par moyen du réseau radio mobile (1) et en pouvant les utiliser par le réseau radio mobile pour la commande d'applications.

15. Station émetteur/récepteur selon la revendication 14, **caractérisé en ce que** celui-ci est configuré pour et/ou adapté à exécuter les étapes de procédé du station émetteur/récepteur d'un procédé selon l'une des revendications 1 à 11.
